# EUROPÄISCHE PATENTSCHRIFT

(11) **EP 3 260 232 B1**
(45) Veröffentlichungstag und Bekanntmachung des Hinweises auf die Patenterteilung: **07.11.2018**
(21) Anmeldenummer: 17175728.9
(22) Anmeldetag: 06.08.2014
(51) Int. Cl.: B23Q 1/62, B23Q 5/38, F16H 19/04, B23Q 3/18

(54) **POSITIONIERSYSTEM**
POSITIONING SYSTEM
SYSTÈME DE POSITIONNEMENT

(43) Veröffentlichungstag der Anmeldung: 27.12.2017
(62) Teilanmeldung aus: 14002756.6
(73) Patentinhaber: FESTO AG & Co. KG, 73734 Esslingen (DE)
(72) Erfinder: Feyrer, Thomas, 73732 Esslingen (DE)
(74) Vertreter: Patentanwälte Magenbauer & Kollegen Partnerschaft mbB

(56) Entgegenhaltungen:
- DE-A1- 1 920 556
- JP-A- H10 267 100
- JP-A- 2006 308 525

## Beschreibung

Die Erfindung betrifft ein Positioniersystem, mit mindestens einem unter Ausführung einer Positionierbewegung in einer durch ein kartesisches x-y-Koordinatensystem definierten Positionierebene relativ zu einem Schlittenträger des Positioniersystems variabel verfahrbaren und positionierbaren Positionierschlitten, wobei der Schlittenträger wenigstens ein durch Antriebsmittel des Positioniersystems zu einer Antriebsdrehbewegung um eine zur x-Achse des Koordinatensystems parallele Drehachse antreibbares y-Antriebszahnrad und wenigstens ein durch Antriebsmittel zu einer Antriebsdrehbewegung um eine zur y-Achse des Koordinatensystems parallele Drehachse antreibbares x-Antriebszahnrad enthält, wobei jedes y-Antriebszahnrad und jedes x-Antriebszahnrad an seinem Außenumfang eine Antriebsverzahnung aufweist und wobei der Positionierschlitten eine Abtriebs-Verzahnungsstruktur aufweist, mit der er während der Positionierbewegung gleichzeitig mit den Antriebsverzahnungen mindestens eines x-Antriebszahnrades und mindestens eines y-Antriebszahnrades in Verzahnungseingriff steht und durch Rotation des mindestens einen x-Antriebszahnrades zu einer Positionierbewegung in der x-Achsrichtung des x-y-Koordinatensystems und durch Rotation des mindestens einen y-Antriebszahnrades zu einer Positionierbewegung in der y-Achsrichtung des x-y-Koordinatensystems antreibbar ist, wobei die Abtriebs-Verzahnungsstruktur des Positionierschlittens eine Vielzahl von in einer zur Positionierebene parallelen Ebene punktförmig verteilten Abtriebszähnen aufweist, die in einer zweidimensionalen Zahnmatrix auf den Kreuzungspunkten zueinander rechtwinkeliger x-Gitterlinien und y-Gitterlinien eines imaginären Kreuzgitters platziert sind, wobei zumindest mehrere der Abtriebszähne der Zahnmatrix in der Lage sind, bei der Positionierbewegung des Positionierschlittens mit sowohl dem mindestens einen x-Antriebszahnrad als auch dem mindestens einen y-Antriebszahnrad in Verzahnungseingriff zu treten.

Ein derartiges Positioniersystem ist aus der JP H10 267100 A bekannt.

Ein aus der DE 1920556 A bekanntes Positioniersystem enthält einen als eine Tischplatte ausgebildeten Positionierschlitten, der bezüglich eines rahmenförmigen Schlittenträgers in einer von einem kartesischen Koordinatensystem aufgespannten Positionierebene zweidimensional verstellbar ist. An dem Schlittenträger sind zwei Antriebszahnräder drehbar gelagert, deren Drehachsen rechtwinkelig zueinander ausgerichtet sind. Die Drehachse des einen Antriebszahnrades verläuft in der x-Achsrichtung des Koordinatensystems, die Drehachse des anderen Antriebszahnrades verläuft in der y-Achsrichtung des Koordinatensystems. Mit jedem dieser Antriebszahnräder stehen mehrere an dem Positionierschlitten ausgebildete, rechtwinkelig zueinander verlaufende Zahnstangen in Verzahnungseingriff, die gemeinsam eine Abtriebs-Verzahnungsstruktur bilden. Beide Antriebszahnräder sind rotativ antreibbar, wobei das Verdrehen des eine zur x-Achse parallele Drehachse aufweisenden Antriebszahnrades ein Verschieben des Positionierschlittens in der y-Achsrichtung zur Folge hat, sodass das betreffende Antriebszahnrad als y-Antriebszahnrad bezeichnet werden kann. In vergleichbarer Weise hat das Verdrehen des eine zur y-Achse parallele Drehachse aufweisenden Antriebszahnrades ein Verschieben des Positionierschlittens in der x-Achsrichtung zur Folge, sodass das betreffende Antriebszahnrad als x-Antriebszahnrad bezeichnet werden kann. Durch sich überlagernde Rotationsbewegungen des x-Antriebszahnrades und des y-Antriebszahnrades können Positionierbewegungen des Positionierschlittens erzeugt werden, bei denen sich Bewegungsrichtungen in der x-Achsrichtung und in der y-Achsrichtung überlagern.

Ein Nachteil des bekannten Positioniersystems ist ein flächenmäßig verhältnismäßig kleiner Positionierbereich des Positionierschlittens. Größere Positionierbereiche können nur durch die Verwendung entsprechend langer Antriebszahnräder und eines entsprechend großvolumigen Schlittenträgers realisiert werden.

Der Erfindung liegt die Aufgabe zugrunde, Maßnahmen zu treffen, die bei einfachem Aufbau in Verbindung mit geringen Abmessungen der Antriebszahnräder einen großen Positionierbereich des Positionierschlittens ermöglichen.

Zur Lösung dieser Aufgabe ist in Verbindung mit den eingangs genannten Merkmalen vorgesehen, dass sich der Schlittenträger aus einer Mehrzahl von Trägermodulen zusammensetzt, die in der x-Achsrichtung und/oder in der y-Achsrichtung modular aneinander anreihbar oder aneinander angereiht sind und die jeweils mindestens ein x-Antriebszahnrad und mindestens ein y-Antriebszahnrad mit jeweils zugeordneten Antriebsmitteln enthalten, wobei ein und derselbe Positionierschlitten bei seiner Positionierbewegung über mehrere der Trägermodule hinweg verfahrbar ist.

Auf diese Weise sind die für den Bewegungsantrieb in der x-Achsrichtung und für den Bewegungsantrieb in der y-Achsrichtung verantwortlichen Bestandteile der Abtriebs-Verzahnungsstruktur zu einer zweidimensionalen Verzahnungseinheit zusammengefasst, die über eine bevorzugt regelmäßige Zahnmatrix verfügt, welche sich aus einer Vielzahl von Abtriebszähnen zusammensetzt, die matrixartig in einer zur Positionierebene parallelen Ebene zweidimensional punktförmig verteilt sind. Die einzelnen Abtriebszähne liegen auf den Kreuzungspunkten zueinander rechtwinkeliger Gitterlinien, von denen die einen in der x-Achsrichtung verlaufen und daher als x-Gitterlinien bezeichnet sind und von denen die anderen in der y-Achsrichtung verlaufen und deshalb als y-Gitterlinien bezeichnet werden. Das Kreuzgitter liegt dabei mit allen Gitterlinien in einer x-y-Ebene des Koordinatensystems. Die daraus resultierende Abtriebs-Verzahnungsstruktur könnte auch als Kreuzverzahnung bezeichnet werden. Ein wesentlicher Aspekt der Zahnmatrix besteht darin, dass zumindest mehrere und vorzugsweise sämtliche der Abtriebszähne in der Lage sind, bei der Positionierbewegung des Positionierschlittens sowohl mit dem x-Antriebszahnrad als auch mit dem y-Antriebszahnrad in Verzahnungseingriff zu treten. Dies selbstverständlich nicht gleichzeitig, sondern alternativ beziehungsweise nacheinander.

Ein Verlagern des Positionierschlittens in der x-Achsrichtung kann mittels angetriebener Rotation eines x-Antriebszahnrades und dem daraus resultierenden antriebsmäßigen Zusammenwirken zwischen der Antriebsverzahnung des x-Antriebszahnrades und den momentan zugeordneten Abtriebszähnen der Zahnmatrix bewirkt werden, wobei diejenigen Abtriebszähne der Zahnmatrix, die zur gleichen Zeit mit der Antriebsverzahnung des y-Antriebszahnrades in Eingriff stehen, durch dessen Antriebsverzahnung in der x-Achsrichtung linear verschiebbar geführt sind und in der Antriebsverzahnung des y-Antriebszahnrades entlanggleiten. Dies findet vergleichbar in umgekehrtem Sinne auch bei einer angetriebenen Rotationsbewegung eines y-Antriebszahnrades statt. Durch aufeinander abgestimmte angetriebene Rotation mindestens eines mit der Abtriebs-Verzahnungsstruktur in Eingriff stehenden x-Antriebszahnrades und eines gleichzeitig ebenfalls mit der Abtriebs-Verzahnungsstruktur in Eingriff stehenden y-Antriebszahnrades kann der Positionierschlitten in der Positionierebene mit jeder gewünschten Bewegungsrichtung und auch mit variabler Geschwindigkeit verlagert werden. Die Möglichkeit des Zusammenwirkens der Abtriebszähne mit sowohl dem mindestens einen x-Antriebszahnrad als auch dem mindestens einen y-Antriebszahnrad macht es möglich, einen flächenmäßig relativ großen Positionierbereich des Positionierschlittens in Verbindung mit kompakten Abmessungen der Antriebszahnräder zu realisieren. Es besteht insbesondere auch der Vorteil, dass die Grundfläche des Schlittenträgers für die Positionierbewegung des Positionierschlittens optimal ausnutzbar ist, wobei sogar eine Anordnung möglich ist, bei der der Positionierschlitten den Schlittenträger randseitig überragt.

Als besonders vorteilhaft wird der modulare Aufbau des Schlittenträgers angesehen. Ein solcher modularer Schlittenträger enthält eine Mehrzahl von Trägermodulen, die zur Bildung des Schlittenträgers in der x-Achsrichtung und/oder in der y-Achsrichtung modular aneinander anreihbar oder aneinander angereiht sind. Von diesen Trägermodulen enthält jedes Trägermodul mindestens ein und bevorzugt genau ein x-Antriebszahnrad sowie mindestens ein und bevorzugt genau ein y-Antriebszahnrad, mit jeweils zugeordneten Antriebsmitteln. Bevorzugt sind Befestigungsmittel vorhanden, die die aneinander angereihten Trägermodule relativ zueinander fixieren, wobei es sich beispielsweise um Schraubbefestigungssysteme oder auch um Rastverbindungssysteme handeln kann. Alle Trägermodule gemeinsam bilden eine den Schlittenträger repräsentierende Modulmatrix. Der modulare Aufbau ermöglicht es, sehr einfach Schlittenträger mit unterschiedlicher flächenhafter Ausdehnung und/oder unterschiedlicher Außenkontur zu realisieren, um anwendungsspezifischen Gegebenheiten Rechnung zu tragen.

Die weiter unten im Zusammenhang mit dem Schlittenträger erwähnten vorteilhaften Ausstattungsmerkmale treffen bei dem modularen Aufbau zweckmäßigerweise für jedes einzelne Trägermodul zu.

Vorteilhafte Weiterbildungen der Erfindung gehen aus den Unteransprüchen hervor.

Wie schon angedeutet, ist es vorteilhaft, wenn sämtliche der Abtriebszähne der Zahnmatrix bei der Positionierbewegung des Positionierschlittens in der Lage sind, in zeitlichem Abstand mit sowohl mindestens einem x-Antriebszahnrad als auch mindestens einem y-Antriebszahnrad in Verzahnungseingriff zu gelangen.

Das die punktuelle Verteilung der Abtriebszahnräder definierende Kreuzgitter hat zweckmäßigerweise eine regelmäßige Struktur, wobei die x-Gitterlinien untereinander den gleichen Abstand haben wie die y-Gitterlinien.

Die Abtriebs-Verzahnungsstruktur befindet sich zweckmäßigerweise an einer dem Schlittenträger zugewandten Unterseite des Positionierschlittens.

Es ist vorteilhaft, wenn der mindestens eine Positionierschlitten mit seiner Abtriebs-Verzahnungsstruktur lose auf den Antriebsverzahnungen der Antriebszahnräder aufliegt. Die Abtriebs-Verzahnungsstruktur liegt vorzugsweise stets gleichzeitig auf mindestens einem x-Antriebszahnrad und mindestens einem y-Antriebszahnrad auf. Bevorzugt liegt die Abtriebs-Verzahnungsstruktur stets gleichzeitig auf genau einem x-Antriebszahnrad und genau einem y-Antriebszahnrad auf.

Der Positionierschlitten kann insbesondere mit einer an seiner Unterseite angeordneten Abtriebs-Verzahnungsstruktur von oben her auf den nach oben weisenden Abschnitten der Antriebsverzahnung der Antriebszahnräder aufliegen. Es besteht dabei die vorteilhafte Möglichkeit, beim Zusammenbau des Positioniersystems jeden Positionierschlitten einfach von oben her auf den Schlittenträger aufzulegen, sodass er mit wenigstens zwei Antriebszahnrädern in Verzahnungseingriff gelangt. Umgekehrt lässt sich jeder Positionierschlitten durch einfaches Abheben bei Bedarf auch wieder vom Schlittenträger entfernen. Der Positionierschlitten hat zweckmäßigerweise keinerlei Bestandteil, der einen Bestandteil des Schlittenträgers untergreift.

Der mindestens eine Positionierschlitten ist vorzugsweise als ein Produktträger ausgebildet, der mit mindestens einem im Rahmen der Positionierbewegung verfahrbaren und zu positionierenden Produkt bestückbar ist. Der Positionierschlitten kann mit Befestigungsmitteln ausgestattet sein, die eine bevorzugt lösbare Fixierung mindestens eines Produktes ermöglichen. Es besteht aber auch die Möglichkeit, den Positionierschlitten als Grundträger für einen eigentlichen Produktträger zu nutzen, wobei der eigentliche Produktträger beispielsweise eine sogenannte Mikrotiterplatte sein kann, die zur Aufbewahrung beziehungsweise zum Transport von Fluidproben einsetzbar ist.

Vorzugsweise hat der Positionierschlitten einen rechteckigen Umriss. Der Positionierschlitten ist vorzugsweise plattenförmig ausgebildet und kann eine Palette repräsentieren.

Die Zahnmatrix der Abtriebs-Verzahnungsstruktur hat zweckmäßigerweise eine rechteckige Außenkontur mit vier zueinander rechtwinkeligen Randbereichen. Sie ist zweckmäßigerweise an keinem der vier Randbereiche begrenzt, sodass eine uneingeschränkte Bewegungsmöglichkeit zur Ausführung der Positionierbewegung gegeben ist.

Bevorzugt haben sämtliche Antriebszahnräder des Schlittenträgers untereinander den gleichen Durchmesser, wobei die Drehachsen dieser Antriebszahnräder in einer gemeinsamen, zu der Positionierebene parallelen Ebene liegen, die als Achsebene bezeichnet werden kann.

Die dem Positionierschlitten zugewandten Umfangsabschnitte der Antriebsverzahnungen der diversen Antriebszahnräder sollten gemeinsam in einer zu der Positionierebene parallelen Ebene liegen. Dabei besteht durchaus die Möglichkeit, die Antriebszahnräder mit unterschiedlichen Durchmessern zu realisieren, wobei dann aber die Drehachsen dieser über unterschiedliche Durchmesser verfügenden Antriebszahnräder unterschiedlich weit zur Positionierebene beabstandet sind.

Der Schlittenträger kann mit einer beliebigen Anzahl von x-Antriebszahnrädern und/oder y-Antriebszahnrädern ausgestattet sein. Verfügt der Schlittenträger über eine größere Anzahl großflächig verteilter x-Antriebszahnräder und y-Antriebszahnräder, lässt sich ein besonders großer Positionierbereich in der Positionierebene realisieren. Der Positionierschlitten kann dabei während seiner Positionierbewegung nacheinander mit unterschiedlichen x-Antriebszahnrädern und/oder y-Antriebszahnrädern in Eingriff gelangen und diesen Eingriff auch wieder verlassen.

Als besonders vorteilhaft hat es sich herausgestellt, wenn der Schlittenträger über mindestens ein Antriebszahnradpaar verfügt, das sich aus einem x-Antriebszahnrad und einem y-Antriebszahnrad zusammensetzt, wobei diese beiden Antriebszahnräder in einer zur Positionierebene parallelen Ebene mit L-förmiger Konfiguration angeordnet sind. Dabei ist dann ein axialer Endbereich des x-Antriebszahnrades benachbart zu einem axialen Endbereich des y-Antriebszahnrades platziert. Wenn der Schlittenträger einen rechteckigen Umriss hat, ist mindestens ein Antriebszahnradpaar bevorzugt so platziert, dass sich die beiden Antriebszahnräder entlang zweier in einem gemeinsamen Eckpunkt aufeinandertreffender Seitenränder des Schlittenträgers erstrecken.

Bevorzugt enthält der Schlittenträger eigene Antriebsmittel für jedes Antriebszahnrad. Bei diesen Antriebsmitteln handelt es sich vorzugsweise um elektromotorische Antriebsmittel, beispielsweise um Schrittmotoren oder Servomotoren.

Zweckmäßigerweise können die Antriebszahnräder des Schlittenträgers durch die ihnen zugeordneten Antriebsmittel unabhängig voneinander rotativ angetrieben werden. Die momentan mit der Abtriebs-Verzahnungsstruktur in Eingriff stehenden Antriebszahnräder können insbesondere wahlweise mit gleichem oder mit einander entgegengesetztem Drehsinn angetrieben werden, wobei die Rotation sowohl im Uhrzeigersinn als auch entgegen des Uhrzeigersinns erfolgen kann. Auch können unterschiedliche Drehgeschwindigkeiten für beide Antriebszahnräder vorgegeben werden, insbesondere auch derart, dass das eine Antriebszahnrad mit einer anderen Geschwindigkeit verdreht wird als das andere Antriebszahnrad. Zweckmäßigerweise enthält das Positioniersystem Ansteuerungsmittel, die es ermöglichen, die Antriebszahnräder aufeinander abgestimmt anzutreiben, um eine jeweils gewünschte Bewegungsrichtung und Bewegungsgeschwindigkeit der Positionierbewegung zu realisieren.

Der Schlittenträger des Positioniersystems kann als eine einzige Trägereinheit konzipiert sein, die über wenigstens ein x-Antriebszahnrad und wenigstens ein y-Antriebszahnrad verfügt, die aber auch in mehrfacher Anzahl mit einem x-Antriebszahnrad und/oder mit einem y-Antriebszahnrad ausgestattet sein kann.

Sämtliche Trägermodule des Schlittenträgers sind zweckmäßigerweise elektrisch und/oder fluidisch und/oder optisch miteinander vernetzbar oder vernetzt, um die zu ihrem Betrieb erforderliche Energieübertragung und/oder Datenübertragung und/oder Signalübertragung sehr einfach vornehmen zu können. Jedes Trägermodul kann mit Steckmitteln oder sonstigen, bevorzugt lösbaren Verbindungsmitteln ausgestattet sein, die eine einfache Vernetzung beim Zusammenbau der Trägermodule ermöglichen.

Bei einer bevorzugten Ausführungsform des Positioniersystems ist die Grundfläche der die Zahnmatrix enthaltenden Abtriebs-Verzahnungsstruktur mindestens eines Positionierschlittens größer als die Grundfläche des Schlittenträgers oder - bei modularem Schlittenträgeraufbau - eines jeden Trägermoduls. Damit wird die gute Flächenausnutzung des Positioniersystems dokumentiert.

Setzt sich der Schlittenträger modular aus mehreren aneinandergereihten Trägermodulen zusammen, besteht für ein und denselben Positionierschlitten die Möglichkeit, sich über mehrere und zweckmäßigerweise über sämtliche Trägermodule hinweg zu bewegen. Durch aufeinander abgestimmten Betrieb der Antriebszahnräder der einzelnen Trägermodule kann der Positionierschlitten bei seiner Positionierbewegung problemlos zwischen benachbarten Trägermodulen "übergeben" werden. Beispielsweise kann mittels einer integrierten Kraftmessung detektiert werden, wenn ein Positionierschlitten ein Trägermodul verlässt und in Kontakt mit einem Antriebszahnrad eines benachbarten Trägermoduls gelangt. Selbstverständlich können zusätzlich oder alternativ auch andere Detektionsmittel vorhanden sein, um die aktuelle Position des Positionierschlittens zu überwachen und bei seiner Ansteuerung zu verarbeiten.

Der Schlittenträger kann randseitig mindestens eine Übergabestation definieren, die dazu geeignet ist, Positionierschlitten auf den Schlittenträger zuzuführen und/oder Positionierschlitten von dem Schlittenträger abzuführen. Es besteht die Möglichkeit, separate Übergabestationen für die Zufuhr und die Abfuhr von Positionierschlitten vorzusehen. Der Schlittenträger kann auch mit Arbeitsstationen kombiniert werden, in denen bestimmte Handhabungen an Produkten ausführbar sind, die der Positionierschlitten transportiert.

Die Abtriebs-Verzahnungsstruktur des Positionierschlittens weist zweckmäßigerweise eine Mehrzahl von in der x-Achsrichtung verlaufenden und in einer zur Positionierebene parallelen Ebene mit Abstand nebeneinander angeordneten nutartigen x-Vertiefungen und eine Mehrzahl von in der y-Achsrichtung verlaufenden und in einer zur Positionierebene parallelen Ebene mit Abstand nebeneinander angeordneten nutartigen y-Vertiefungen auf, wobei sich die x-Vertiefungen und die y-Vertiefungen unter seitlicher Flankierung der in der zweidimensionalen Zahnmatrix zusammengefassten, punktförmig verteilten Abtriebszähne rechtwinkelig kreuzen.

Nachfolgend wird die Erfindung anhand der beiliegenden Zeichnung näher erläutert. In dieser zeigen:
- Figur 1: eine Draufsicht einer bevorzugten Ausführungsform des erfindungsgemäßen Positioniersystems mit Blick rechtwinkelig zu einer x-y-Ebene, wobei mehrere Positionierschlitten der besseren Übersichtlichkeit wegen nur strichpunktiert angedeutet sind und wobei der Schlittenträger einen modularen Aufbau hat und sich aus mehreren zweidimensional aneinandergereihten Trägermodulen zusammensetzt,
- Figur 2: einen Ausschnitt des Positioniersystems aus Figur 1, wobei nur eines der Trägermodule des Positioniersystems mit einem darauf angeordneten Positionierschlitten in isometrischer Darstellung gezeigt ist,
- Figur 3: die Anordnung aus Figur 2 in einer Seitenansicht mit Blick gemäß Pfeil III,
- Figur 4: die Anordnung aus Figuren 2 und 3 in einer Draufsicht mit Blickrichtung gemäß Pfeil IV aus Figur 2,
- Figur 5: einen Schnitt durch die Anordnung aus Figuren 2 bis 4 gemäß Schnittlinie V-V aus Figur 4,
- Figur 6: einen Schnitt durch die Anordnung aus Figuren 2 bis 5 gemäß Schnittlinie VI-VI aus Figur 4, wobei der Positionierschlitten im vom Trägermodul abgehobenen Zustand unmittelbar vor dem Aufsetzen auf das Trägermodul gezeigt ist,
- Figur 7: eine Unteransicht des Positionierschlittens mit Blickrichtung gemäß Pfeil VII aus Figur 6 auf die Abtriebs-Verzahnungsstruktur, und
- Figur 8: eine Unteransicht der Anordnung aus Figuren 1 bis 6 mit Blickrichtung gemäß Pfeil VIII aus Figur 6.

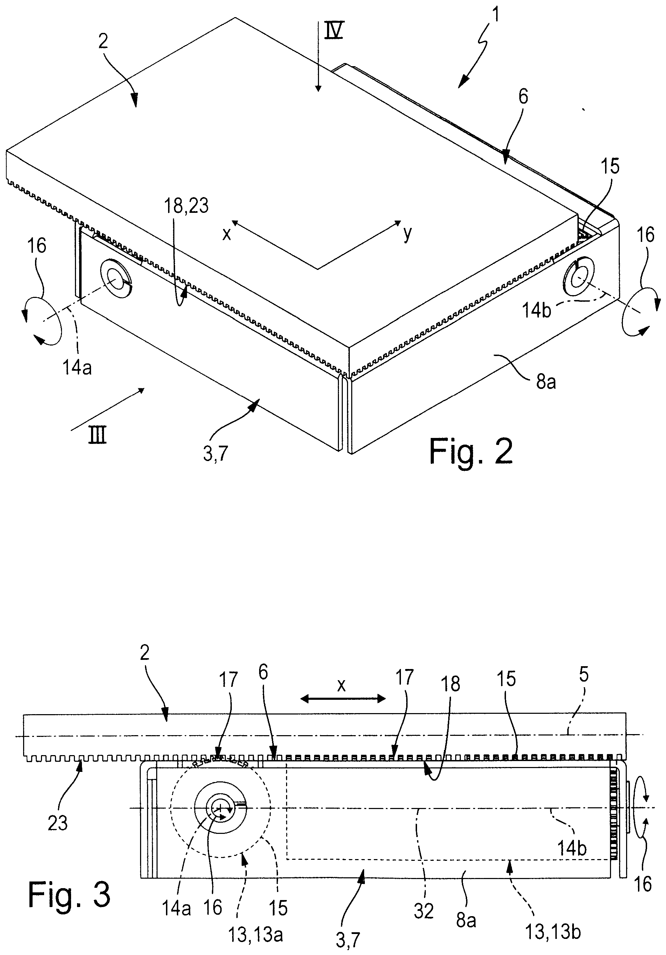

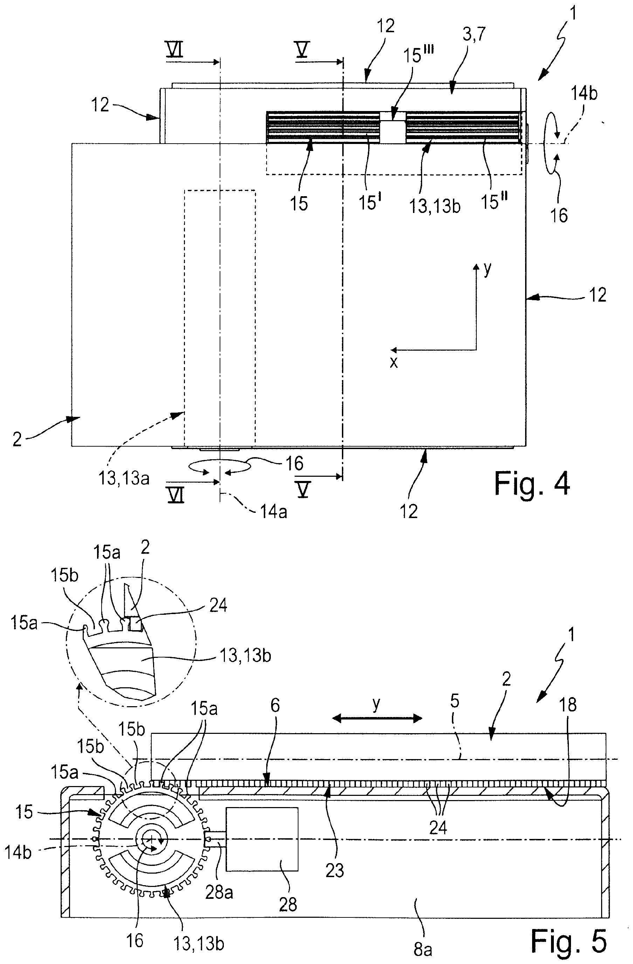

Zu den Abbildungen der Figuren 2 bis 8 ist zu sagen, dass das hier gezeigte Modul auch ein eigenständiges Positioniersystem repräsentieren kann, bei dem der gesamte Schlittenträger aus einem einzigen Trägermodul besteht, das nicht notwendigerweise für eine Aneinanderreihung mit weiteren Trägermodulen ausgelegt ist. Der gesamte Schlittenträger des Positioniersystems kann hier einheitlich aus einem einzigen Trägermodul bestehen.

Das in seiner Gesamtheit mit Bezugsziffer 1 bezeichnete Positioniersystem enthält mindestens einen Positionierschlitten 2, der an einem als Basis des Positioniersystems 1 fungierenden Schlittenträger 3 gelagert ist und unter Ausführung einer durch Pfeile illustrierten Positionierbewegung 4 relativ zu dem Schlittenträger 3 in einer Positionierebene 5 variabel verfahrbar und positionierbar ist.

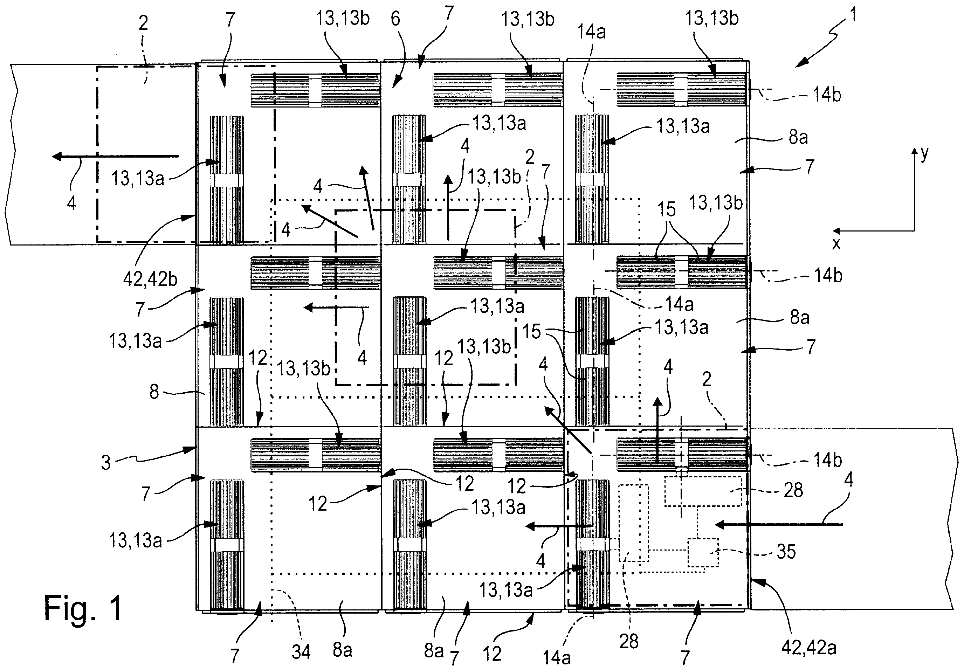

Die Positionierebene 5 ist durch ein kartesisches x-y-Koordinatensystem definiert, das eine x-Achse und eine hierzu rechtwinkelige y-Achse aufweist. Die Richtung der x-Achse sei im Folgenden auch als x-Achsrichtung bezeichnet, die Richtung der y-Achse sei im Folgenden auch als y-Achsrichtung bezeichnet. In den Figuren 1, 4, 7 und 8 verlaufen die x-Achse und die y-Achse und mithin die Positionierebene 5 parallel zur Zeicheneben. In den Figuren 3, 5 und 6 verläuft die Positionierebene 5 senkrecht zur Zeichenebene.

In einer üblichen Gebrauchsorientierung des Positioniersystems 1 ist die Positionierebene 5 von einer Horizontalebene definiert.

Der Schlittenträger 3 hat eine Trägeroberseite 6, die in der üblichen Gebrauchsorientierung des Positioniersystems 1 vertikal nach oben weist. Der mindestens eine Positionierschlitten 2 ist an der Trägeroberseite 6 am Schlittenträger 3 angeordnet.

Die Figur 1 illustriert das Positioniersystem 1 mit mehreren Positionierschlitten 2, die der besseren Übersichtlichkeit wegen nur strichpunktiert angedeutet sind. Die Anzahl der Positionierschlitten 2 ist prinzipiell beliebig. Das Positioniersystem 1 kann auch mit nur einem einzigen Positionierschlitten 2 ausgestattet sein. Im Folgenden getroffene Bezugnahmen auf einen Positionierschlitten 2 sind als Bezugnahmen auf sämtliche jeweils vorhandenen Positionierschlitten 2 zu verstehen.

Der Schlittenträger 3 hat zweckmäßigerweise einen modularen Aufbau und setzt sich aus einer Mehrzahl individueller Trägermodule 7 zusammen. Diese Trägermodule 7 sind unter Bildung einer zweidimensionalen Modulmatrix in der x-y-Ebene beliebig aneinanderreihbar und insbesondere auch mechanisch miteinander koppelbar, sodass sich eine zusammenhängende Struktur ergibt.

Der Schlittenträger 3 hat eine bevorzugt plattenförmige Grundkörperstruktur 8. Jedes Trägermodul 7 weist einen Grundkörper 8a auf, wobei die Trägermodule 7 mit ihren Grundkörpern 8a modular aneinander anreihbar sind, sodass die mehreren aneinandergereihten Grundkörper 8a gemeinsam die Grundkörperstruktur 8 bilden.

Bevorzugt hat jeder Grundkörper 8a einen rechteckigen Grundriss. Dieser rechteckige Grundriss ist bevorzugt quadratisch, was auf das Ausführungsbeispiel zutrifft. Bevorzugt hat jeder Grundkörper 8a vier zueinander rechtwinkelige seitliche Außenflächen 12, die den Grundriss des Grundkörpers 8a definieren.

Innerhalb des modularen Schlittenträgers 3 sind die Trägermodule 7 so ausgerichtet, dass jeweils zwei sich gegenüberliegende seitliche Außenflächen 12 in der x-Achsrichtung und die beiden anderen sich gegenüberliegenden seitlichen Außenflächen 12 in der y-Achsrichtung orientiert sind.

Zur Bildung des Schlittenträgers 3 sind die Trägermodule 7 mit den seitlichen Außenflächen 12 ihrer Grundkörper 8a jeweils paarweise aneinandersetzbar oder aneinandergesetzt. Auf diese Weise lässt sich ein Schlittenträger 3 bilden, der aus einer beliebigen Anzahl von in der x-Achsrichtung verlaufenden Trägermodulreihen 7 und einer beliebigen Anzahl von in der y-Achsrichtung verlaufenden Trägermodulreihen zusammengesetzt ist. Bevorzugt ist jede der vier seitlichen Außenflächen 12 für den Anbau eines weiteren Trägermoduls 7 geeignet, sodass nicht nur regelmäßige, sondern auch unregelmäßige Verteilungsmuster von Trägermodulen 7 realisierbar sind.

Der Schlittenträger 3 ist mit mehreren Zahnrädern ausgestattet, die bezüglich des Positionierschlittens 2 eine Antriebsfunktion erfüllen und deshalb als Antriebszahnräder 13 bezeichnet sind. Mindestens eines der Antriebszahnräder 13 ist für eine Verlagerung des Positionierschlittens 2 in der x-Achsrichtung zuständig und sei deshalb als x-Antriebszahnrad 13a bezeichnet. Mindestens ein anderes Antriebszahnrad 13 ist für eine Verlagerung des Positionierschlittens 2 in der y-Achsrichtung zuständig und sei deshalb als y-Antriebszahnrad 13b bezeichnet.

Jedes x-Antriebszahnrad 13a ist relativ zur Grundkörperstruktur 8 um eine zur y-Achse parallele erste Drehachse 14a verdrehbar. Jedes y-Antriebszahnrad 13b ist relativ zur Grundkörperstruktur 8 um eine zur x-Achse parallele zweite Drehachse 14b verdrehbar. Alle Antriebszahnräder 13 sind direkt oder indirekt an der Grundkörperstruktur 8 drehbar gelagert.

Jedes Antriebszahnrad 13 verfügt an seinem peripheren Außenumfang über eine im Folgenden als Antriebsverzahnung 15 bezeichnete Außenverzahnung. Es handelt sich dabei jeweils um eine Geradverzahnung, wobei jeder Zahn 15a der Antriebsverzahnung 15 und jeder zwischen zwei Zähnen 15a der Antriebsverzahnung 15 befindliche Zahnzwischenraum 15b eine zur zugeordneten Drehachse 14a, 14b parallele Längserstreckung hat.

Bei den Antriebszahnrädern 13 des Ausführungsbeispiels ist die Antriebsverzahnung 15 axial segmentiert und verfügt über zwei axial zueinander beabstandete Verzahnungsabschnitte 15', 15", was damit zusammenhängt, dass das zur Erzeugung einer Rotationsbewegung 16 des betreffenden Antriebszahnrades 13 erforderliche Drehmoment in dem zwischen den beiden Verzahnungsabschnitten 15', 15" ausgebildeten Zwischenraum 15''' in das Antriebszahnrad 13 eingeleitet wird. Eine anderweitige Einleitung des die Rotationsbewegung 16 hervorrufenden Drehmomentes ist aber ebenfalls möglich.

Sämtliche Antriebszahnräder 13 sind so angeordnet, dass sie mit zumindest einem Umfangsabschnitt ihrer Antriebsverzahnung 15 an der Trägeroberseite 6 über die Grundkörperstruktur 8 vorstehen. Bei diesen nach oben vorstehenden Umfangsabschnitten der Antriebsverzahnungen 15 handelt es sich um die eigentlichen Antriebsabschnitte 17 der Antriebszahnräder 13, die mit dem Positionierschlitten 2 antriebsmäßig kooperieren. Die Antriebszahnräder 13 sind insgesamt so ausgerichtet, dass sämtliche Antriebsabschnitte 17 in einer gemeinsamen x-y-Ebene liegen, also in einer zur Positionierebene 5 parallelen Ebene.

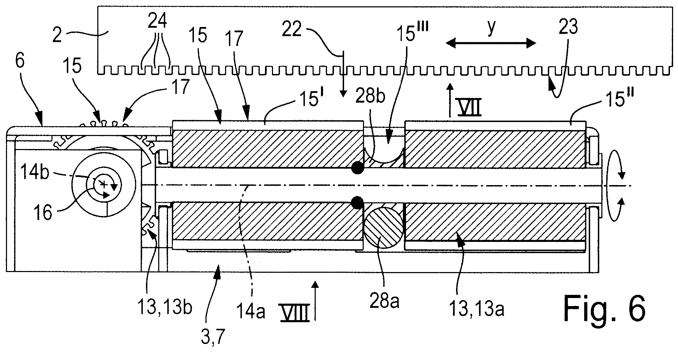

Jeder Positionierschlitten 2 ist mit einer Unterseite 18 voraus gemäß Pfeil 22 in Figur 6 von oben her an den Schlittenträger 3 angesetzt. Mithin sind die Unterseite 18 des Positionierschlittens 2 und die Trägeroberseite 6 des Schlittenträgers 3 in einer zur x-y-Ebene rechtwinkeligen Höhenrichtung, die auch als z-Achsrichtung bezeichnet werden könnte, einander zugewandt.

Der Positionierschlitten 2 weist an seiner Unterseite 18 eine Verzahnungsstruktur auf, die - weil sie dem Abtrieb des Positionierschlittens 2 dient - als Abtriebs-Verzahnungsstruktur 23 bezeichnet sei. Diese Abtriebs-Verzahnungsstruktur 23 steht in jeder bezüglich des Schlittenträgers 3 in der Positionierebene 5 eingenommenen Relativposition des Positionierschlittens 2 mit dem Antriebsabschnitt 17 der Antriebsverzahnung 15 wenigstens eines x-Antriebszahnrades 13a und wenigstens eines y-Antriebszahnrades 13b in Verzahnungseingriff. Der erstmalige Verzahnungseingriff ist sehr einfach unmittelbar beim vertikalen Ansetzen des Positionierschlittens 2 an den Schlittenträger 3 herstellbar. In diesem Zusammenhang ist es vorteilhaft, wenn der Positionierschlitten 2 mit seiner Abtriebs-Verzahnungsstruktur 23 nur lose, allein auf der Grundlage seiner Gewichtskraft und der Gewichtskraft einer eventuellen Beladung, auf den Antriebsverzahnungen 15 der darunter angeordneten Antriebszahnräder 13 aufliegt. Dies ermöglicht bei Bedarf auch ein rasches Abnehmen eines Positionierschlittens 2 vom Schlittenträger 3. Der Schlittenträger 3 kann auf diese Weise sehr zeitsparend mit einer beliebigen Anzahl von Positionierschlitten 2 ausgestattet werden.

Die Abtriebs-Verzahnungsstruktur 23 hat eine spezielle Ausgestaltung. Sie verfügt über eine Vielzahl von nach Art von Vorsprüngen ausgebildeten Abtriebszähnen 24, die in der x-y-Ebene mit regelmäßiger zweidimensionaler Verteilung punktförmig angeordnet sind. Alle Abtriebszähne 24 zusammen definieren mithin eine zweidimensionale Zahnmatrix 25, die sich aus einer Vielzahl von jeweils eine Vielzahl von Abtriebszähnen enthaltenden linearen Zahnreihen zusammensetzt, die sich jeweils in der x-Achsrichtung erstrecken und die in der y-Achsrichtung mit untereinander gleichem Abstand nebeneinander angeordnet sind.

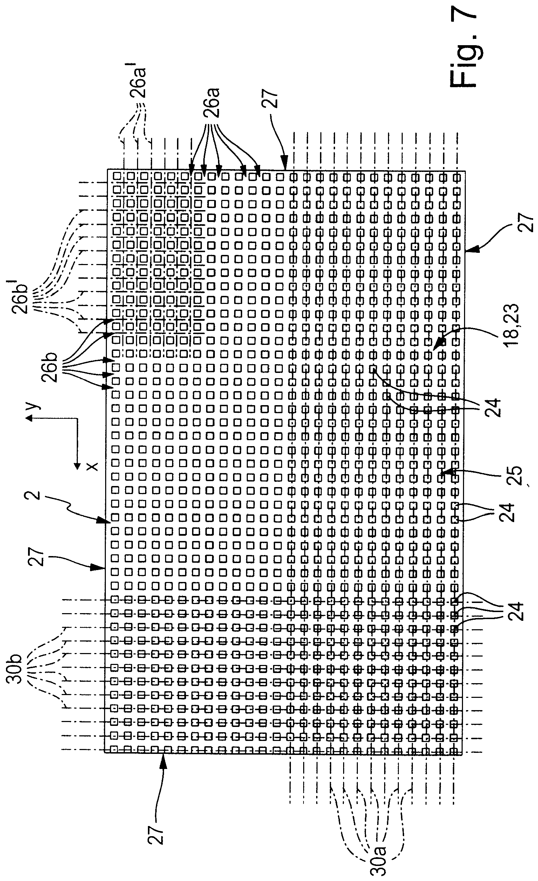

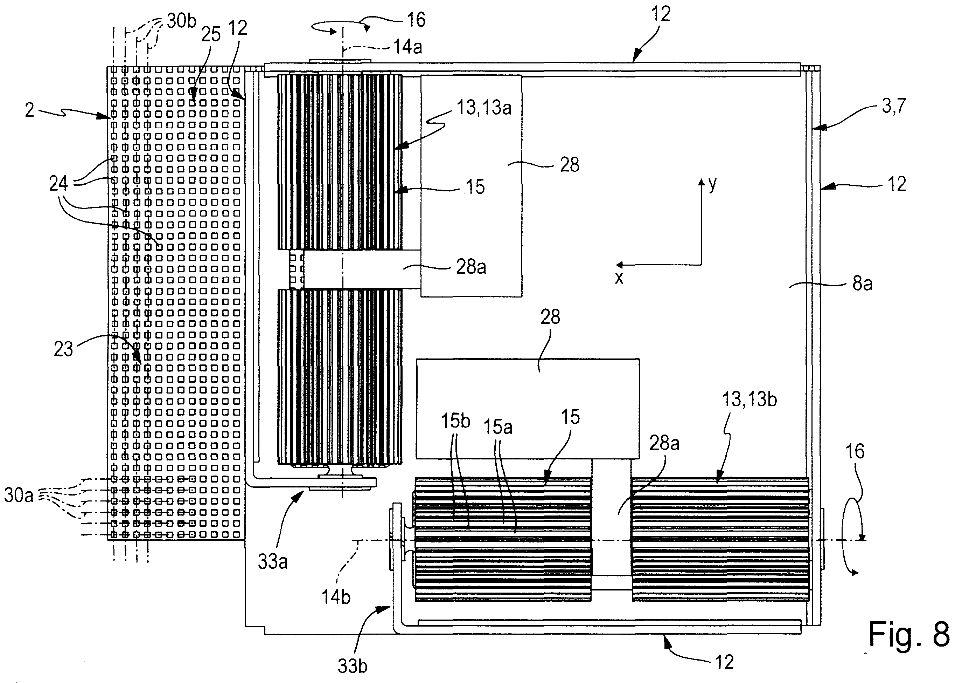

Mit anderen Worten sind die einzelnen Abtriebszähne 24 auf den Kreuzungspunkten eines in Figuren 7 und 8 illustrierten imaginären Kreuzgitters platziert, das über eine Mehrzahl zueinander paralleler x-Gitterlinien 30a und eine Mehrzahl zueinander paralleler y-Gitterlinien 30b verfügt, wobei es sich bei den x-Gitterlinien 30a um in der x-Achsrichtung verlaufende Gitterlinien und bei den y-Gitterlinien 30b um in der y-Achsrichtung verlaufende Gitterlinien handelt. Die x-Gitterlinien 30a kreuzen die y-Gitterlinien 30b im rechten Winkel und liegen alle in ein und derselben x-y-Ebene. Der gegenseitige Abstand zwischen den jeweils benachbarten x-Gitterlinien 30a ist bevorzugt gleich groß, ebenso der gegenseitige Abstand zwischen den jeweils benachbarten y-Gitterlinien 30b. Bevorzugt ist der Abstand zwischen den jeweils benachbarten x-Gitterlinien 30a auch gleich groß wie der gegenseitige Abstand zwischen den jeweils benachbarten y-Gitterlinien 30b. Jeder Abtriebszahn 24 ist bezüglich der ihm in der x-Achsrichtung und in der y-Achsrichtung benachbarten Abtriebszähne 24 identisch beabstandet.

Die Antriebszähne 24 sind beispielsweise noppenförmig oder kegelstumpfförmig oder pyramidenstumpfförmig gestaltet. Bei der Form eines Pyramidenstumpfes liegt zweckmäßigerweise eine regelmäßige vierseitige Pyramidenform zugrunde.

Zwischen in der y-Achsrichtung nebeneinander angeordneten Zahnreihen der Abtriebszähne 24 - im Folgenden auch als x-Zahnreihen bezeichnet - verläuft zweckmäßigerweise jeweils eine sich in der x-Achsrichtung erstreckende nutartige Vertiefung, die aufgrund ihrer Ausrichtung als x-Vertiefung 26a bezeichnet sei. Jede dieser x-Vertiefungen 26a hat eine in der x-Achsrichtung verlaufende Längsachse 26a'. Ferner erstreckt sich zwischen jeweils in der x-Achsrichtung nebeneinander angeordneten Zahnreihen von Abtriebszähnen 24 - die im Folgenden auch als y-Zahnreihen bezeichnet seien - eine in der y-Achsrichtung verlaufende nutartige Vertiefung, die als y-Vertiefung 26b bezeichnet sei. Jede y-Vertiefung 26b hat eine in der y-Achsrichtung verlaufende Längsachse 26b'. Alle x-Vertiefungen 26a und auch alle y-Vertiefungen 26b verlaufen in einer zur Positionierebene 5 parallelen x-y-Ebene, wobei sie zweckmäßigerweise in einer gemeinsamen x-y-Ebene angeordnet sind.

Wie insbesondere aus Figur 7 gut ersichtlich ist, kreuzen sich die x-Vertiefungen 26a einerseits und die y-Vertiefungen 26b andererseits im rechten Winkel, wobei die Kreuzungspunkte untereinander den gleichen Abstand haben. Dabei werden sämtliche Abtriebszähne 24, abgesehen von den am Rand der Zahnmatrix 25 liegenden Abtriebszähnen 24, seitlich von jeweils zwei x-Vertiefungen 26a und zwei y-Vertiefungen 26b flankiert.

Die Abtriebs-Verzahnungsstruktur 23 hat in der x-y-Ebene zweckmäßigerweise eine rechteckige Außenkontur. Vorzugsweise hat der Positionierschlitten 2 in Draufsicht gesehen einen rechteckigen Umriss, wobei sich die Abtriebs-Verzahnungsstruktur 23 bis zu allen vier seitlichen Randbereichen 27 des Positionierschlittens 2 erstreckt. Die Abtriebs-Verzahnungsstruktur 23 ist an allen vier Randbereichen 27 unbegrenzt, was bedeutet, dass sowohl die x-Vertiefungen 26a als auch die y-Vertiefungen 26b stirnseitig jeweils offen sind.

Wenn der Positionierschlitten 2 auf dem Schlittenträger 3 platziert ist, greifen einige der Abtriebszähne 24 der Abtriebs-Verzahnungsstruktur 23 in die Zahnzwischenräume 15b eines x-Antriebszahnrades 13a ein und einige weitere Abtriebszähne 24 greifen in die Zahnzwischenräume 15b eines y-Antriebszahnrades 13b ein. Gleichzeitig greifen Zähne 15a des x-Antriebszahnrades 13a und des y-Antriebszahnrades 13b in eine x-Vertiefung 26a oder eine y-Vertiefung 26b der Abtriebs-Verzahnungsstruktur 23 ein.

Wird nun das x-Antriebszahnrad 13a in Rotation versetzt, verlagert es aufgrund des Verzahnungseingriffes den Positionierschlitten 2 in der x-Achsrichtung, wobei gleichzeitig die Zahnzwischenräume 15b des y-Antriebszahnrades 13b als Führungsnuten fungieren, in denen die in sie eingreifenden Abtriebszähne 24 linear verschiebbar geführt sind. In vergleichbarer Weise bewirkt eine Rotationsbewegung 16 des y-Antriebszahnrades 13b eine Positionierbewegung 4 des Positionierschlittens 2 in der y-Achsrichtung, wobei die Antriebsverzahnung 15 des x-Antriebszahnrades 13a in Verbindung mit den in sie eingreifenden Abtriebszähnen 24 eine Linearführung des Positionierschlittens 2 in der y-Achsrichtung bewirkt.

Der Schlittenträger 3 ist für jedes Antriebszahnrad 13 mit eigenen Antriebsmitteln 28 ausgestattet. Mit Hilfe dieser Antriebsmittel 28 kann das zugeordnete Antriebszahnrad 13 wahlweise im Uhrzeigersinn oder im Gegenuhrzeigersinn zu der Rotationsbewegung 16 angetrieben werden, und vorzugsweise jeweils auch mit variabler Drehgeschwindigkeit. Durch aufeinander abgestimmte Ansteuerung der Antriebsmittel 28 kann die Richtung der Positionierbewegung 4 vorgegeben werden. Auf diese Weise besteht nicht nur die Möglichkeit, einen Positionierschlitten 2 wahlweise in der x-Achsrichtung oder in der y-Achsrichtung zu bewegen, sondern darüber hinaus auch mit jeder anderen Bewegungsrichtung und Bewegungsform innerhalb der Positionierebene 5.

Die Antriebsmittel 28 sind bevorzugt elektromotorischer Art und bestehen beispielsweise pro Antriebszahnrad 13 aus einem als Schrittmotor oder als Servomotor ausgebildeten Elektromotor. Die antriebsmäßige Kopplung mit dem zugeordneten Antriebszahnrad 13 geschieht beispielsweise über eine rotativ antreibbare Antriebsschnecke 28a, die mit einem in dem Zwischenraum 15''' platzierten Schneckenrad 28b des Antriebszahnrades 13 in Eingriff steht.

Der Umstand, dass die Antriebszahnräder 13 unabhängig voneinander rotativ antreibbar sind, macht es auch möglich, auf einem mit mehreren x-Antriebszahnrädern 13a und mit mehreren y-Antriebszahnrädern 13b ausgestatteten Schlittenträger 3 gleichzeitig mehrere Positionierschlitten 2 anzuordnen und unabhängig voneinander zu verfahren und zu positionieren. Die punktuelle Verteilung der Abtriebszähne 24 in den Kreuzungspunkten eines regelmäßigen Kreuzgitters macht es möglich, dass die gleichen Abtriebszähne 24 bei der Positionierbewegung 4 des Positionierschlittens 2 alternativ mit sowohl einem x-Antriebszahnrad 13a als auch einem y-Antriebszahnrad 13b in Verzahnungseingriff gelangen können. Zwar steht jeder Abtriebszahn 24 zu keiner Zeit in gleichzeitigem Eingriff mit einem x-Antriebszahnrad 13a und einem y-Antriebszahnrad 13b. Zumindest einige und bevorzugt sämtliche Abtriebszähne 24 sind jedoch jeweils in der Lage, bei der Positionierbewegung 4 zeitweilig mit einem x-Antriebszahnrad 13a und danach zeitweilig mit einem y-Antriebszahnrad 13b in Eingriff zu stehen. Die Abtriebszähne 24 der Abtriebs-Verzahnungsstruktur 23 sind also nicht spezifisch entweder einem x-Antriebszahnrad 13a oder einem y-Antriebszahnrad 13b zugeordnet, sondern können je nach Position des Positionierschlittens 2 mit sowohl einem x-Antriebszahnrad 13a als auch einem y-Antriebszahnrad 13b antriebsmäßig kooperieren. Daraus ergibt sich für den Positionierschlitten 2 selbst bei relativ kurzbauenden Antriebszahnrädern 13 ein relativ großer Positionierbereich in der x-y-Ebene. Oder anders ausgedrückt ist der Positionierbereich des Positionierschlittens 2 nicht durch die Größe der Antriebszahnräder 13 vorgegeben, sondern durch die flächenhafte Ausdehnung der Zahnmatrix 25.

Man kann folglich die Grundfläche der die Zahnmatrix 25 enthaltenden Abtriebs-Verzahnungsstruktur 23 größer gestalten als die Grundfläche des Schlittenträgers 3 oder jedes Trägermoduls 7. Der Positionierschlitten 2 kann also bei seiner Positionierbewegung ohne weiteres Positionen einnehmen, bei denen er über den Seitenrand des Schlittenträgers 3 beziehungsweise eines Trägermoduls 7 hinausragt.

Vorzugsweise haben alle Antriebszahnräder 13 des Schlittenträgers 3 im Vergleich zueinander den gleichen Durchmesser. Auf diese Weise ergibt sich ein optimales Zusammenwirken mit der Abtriebs-Verzahnungsstruktur 23 sämtlicher Antriebszahnräder 13. Die Drehachsen 14a, 14b sämtlicher den gleichen Durchmesser aufweisenden Antriebszahnräder 13 liegen in einer gemeinsamen, als Achsebene 32 bezeichneten Ebene, die parallel zur Positionierebene 5 ausgerichtet ist.

Es besteht allerdings durchaus die Möglichkeit, für mehrere Antriebszahnräder 13 unterschiedliche Durchmesser zu wählen, wenn die zugeordneten Drehachsen dann auf unterschiedlichem Höhenniveau am Schlittenträger 3 angeordnet sind, sodass die Antriebsabschnitte 17 ungeachtet der unterschiedlichen Durchmesser in einer gemeinsamen Ebene liegen.

Es ist durchaus möglich, ein Positioniersystem 1 mit nur einem einzigen x-Antriebszahnrad 13a und nur einem einzigen y-Antriebszahnrad 13b zu verwirklichen. Ein solches Positioniersystem 1 hat dann beispielsweise den anhand der Figuren 2 bis 8 illustrierten Aufbau, wobei das hier gezeigte Trägermodul 7 dann den gesamten Schlittenträger 3 bildet, der als eine Einheit konzipiert ist. Der besondere Vorteil des Positioniersystems 1 äußert sich jedoch vor allem dann, wenn der Schlittenträger 3 mit einer Mehrzahl von x-Antriebszahnrädern 13a und/oder mit einer Mehrzahl von y-Antriebszahnrädern 13b ausgestattet ist, wobei er vorzugsweise sowohl über eine Mehrzahl von x-Antriebszahnrädern 13a als auch über eine Mehrzahl von y-Antriebszahnrädern 13b verfügt. Letzteres trifft auf das in Figur 1 illustrierte Ausführungsbeispiel zu.

Das in Figur 1 illustrierte Positioniersystem 1 hat den schon erwähnten modularen Aufbau mit einer Mehrzahl in einer x-y-Ebene aneinandergesetzter Trägermodule 7. Jedes dieser Trägermodule 7 verfügt über einen Grundkörper 8a und über zwei Antriebszahnräder 13, von denen eines ein x-Antriebszahnrad 13a und das andere ein y-Antriebszahnrad 13b ist. Diese beiden Antriebszahnräder 13, 13a, 13b bilden ein Antriebszahnradpaar, das bevorzugt eine L-förmige Konfiguration hat. Die Drehachse 14a des x-Antriebszahnrades 13a liegt dabei auf dem einen L-Schenkel, während die Drehachse 14b des y-Antriebszahnrades 13b auf dem anderen L-Schenkel der L-förmigen Konfiguration liegt. Gleichzeitig ist dabei ein axialer Endbereich 33a des x-Antriebszahnrades 13a benachbart zu einem axialen Endbereich 33b des y-Antriebszahnrades 13b angeordnet.

Vorzugsweise sind die beiden Antriebszahnräder 13 derart innerhalb des Grundrisses des Grundkörpers 8a platziert, dass sich jedes Antriebszahnrad 13 neben und entlang einer von zwei seitlichen Außenflächen 12 des Grundkörpers 8a erstreckt, die sich in einem Eckbereich des Grundkörpers 8a treffen.

Der zwischen den beiden Antriebszahnrädern 13, 13a, 13b liegende Bereich ist optimal nutzbar zur Unterbringung der Antriebsmittel 28.

Zweckmäßigerweise sind die verschiedenen Trägermodule 7 untereinander identisch ausgebildet. Sie sind auch vorzugsweise so aneinander angereiht, dass die Ausrichtung ihrer Antriebszahnräder 13 untereinander gleich ist.

Bevorzugt ergibt sich innerhalb des Schlittenträgers 3 eine derartige Anordnung von Antriebszahnrädern 13, dass mehrere zueinander rechtwinkelige Reihen von x-Antriebszahnrädern 13a und y-Antriebszahnrädern 13b vorliegen. So enthält der Schlittenträger 3 zweckmäßigerweise mehrere in der x-Achsrichtung verlaufende Zahnradreihen, die in der y-Achsrichtung zueinander beabstandet sind und deren Antriebszahnräder 13 aus y-Antriebszahnrädern 13b bestehen, die mit zueinander koaxialen Längsachsen axial aufeinanderfolgend angeordnet sind. In vergleichbarer Weise enthält der Schlittenträger 3 mehrere in der y-Achsrichtung verlaufende, in der x-Achsrichtung zueinander beabstandete Reihen von Antriebszahnrädern 13, bei denen es sich durchweg um x-Antriebszahnräder 13a handelt, die innerhalb der jeweiligen Zahnradreihe ebenfalls koaxial und mit Abstand zueinander angeordnet sind.

Eine solche Anordnung lässt sich bei einem modularen Aufbau dadurch realisieren, dass gleich ausgebildete Trägermodule 7 mit untereinander gleicher Ausrichtung zweidimensional aneinander angereiht werden.

Die beschriebene Mehrfachausstattung des Schlittenträgers 3 mit Antriebszahnrädern 13 hat den vorteilhaften Effekt, dass der Positionierschlitten 2 in einem sehr großen Positionierbereich verfahren werden kann. Dabei kann ein und derselbe Positionierschlitten 2 seine abtriebsmäßige Kooperation mit den einzelnen Antriebsrädern 13 wechseln. Der Positionierschlitten 2 kann also bei der Positionierbewegung 4 zwischen einzelnen Antriebszahnrädern 13 quasi übergeben werden. Dadurch kann der Positionierschlitten 2 auch längere Wegstrecken auf unterschiedlichen Bahnverläufen zurücklegen. Dies ermöglicht einen besonders flexiblen Einsatz des Positioniersystems 1.

In Figur 1 ist illustriert, wie der Schlittenträger 3 randseitig eine oder mehrere Übergabestationen 42 definieren kann. Hat der Schlittenträger 3 einen modularen Aufbau, ist jede Übergabestation 42 zweckmäßigerweise durch eines der Trägermodule 7 definiert. Bei einer Übergabestation 42 handelt es sich exemplarisch um eine Zuführstation 42a, an der von außerhalb des Positioniersystems 1 nacheinander Positionierschlitten 2 auf den Schlittenträger 3 zugeführt werden können. Solche Positionierschlitten 2 sind beispielsweise außerhalb des Positioniersystems 1 mit einem oder mehreren Produkten bestückt worden, die innerhalb des Positioniersystems 1 durch entsprechendes Verfahren des zugeordneten Positionierschlittens 2 in Arbeitsstationen verbracht werden wo sie eine wie auch immer geartete Bearbeitung oder Verarbeitung erfahren.

Mindestens eine weitere Übergabestation 42 kann eine Abführstation 42b sein, aus der mit mindestens einem oder mehreren Produkten bestückte Positionierschlitten 2 oder auch geleerte Positionierschlitten 2 vom Schlittenträger 3 entfernbar sind.

Bei der Positionierung innerhalb des Positioniersystems 1 kann jeder Positionierschlitten 2 prinzipiell über sämtliche vorhandenen Trägermodule 7 hinweg verfahren werden.

Wenn ein Schlittenträger 3 mit einer Mehrzahl von x-Antriebszahnrädern 13a und/oder y-Antriebszahnrädern 13b ausgestattet ist und das Zusammenwirken dieser Antriebszahnräder 13 mit dem Positionierschlitten 2 wechselt, ist zweckmäßigerweise ein geeignetes Überwachungssystem vorhanden, das für einen nahtlosen Übergang des Positionierschlittens 2 zwischen den einzelnen Antriebszahnrädern 13 sorgt und das gewährleistet, dass die aktuelle Position des Positionierschlittens 2 bekannt ist, sodass durch selektive Ansteuerung der Antriebszahnräder 13 die gewünschte Positionierbewegung 4 des Positionierschlittens 2 erzeugt werden kann.

Die Antriebsmittel 28 sind zweckmäßigerweise mit einer geeigneten Sensorik ausgestattet, die Rückschlüsse auf die aktuelle Drehposition des zugeordneten Antriebszahnrades 13 zulässt, um basierend auf dieser Information einen Positionierschlitten 2 wunschgemäß anzutreiben und zu positionieren. Bei einem modularen Aufbau ist zweckmäßigerweise jedes Trägermodul 7 individuell elektrisch ansteuerbar, um die gewünschten Positionierbewegungen auszuführen.

Die Trägermodule 7 sind zweckmäßigerweise zumindest elektrisch miteinander vernetzbar oder vernetzt, um eine Energieübertragung und/oder Datenübertragung und/oder Signalübertragung vornehmen zu können, die insbesondere für die Positionierbewegung 4 eines Positionierschlittens 2 erforderlich ist. In Figur 1 ist gepunktet ein entsprechendes Netzwerk 34 angedeutet, das mit einer nicht weiter abgebildeten externen elektronischen Steuereinrichtung gekoppelt ist und durch das sämtliche Trägermodule 7 untereinander elektrisch vernetzt sind. Handelt es sich um einen nicht-modularen Schlittenträger 3, können mit Hilfe eines solchen Netzwerkes 34 ebenfalls alle vorhandenen Antriebsmittel 28 und eventuell vorhandene Sensormittel vernetzt werden, um eine zentrale Ansteuerung und Abfragefunktion realisieren zu können.

Innerhalb des Schlittenträgers 3 können dezentrale elektronische Steuereinheiten 35 vorhanden sein, von denen in Figur 1 eine gestrichelt angedeutet ist und die jeweils für die elektrische Ansteuerung der Antriebsmittel 28 einiger der vorhandenen Antriebszahnräder 13 zuständig sind. Vorzugsweise sind je ein x-Antriebszahnrad 13a und ein y-Antriebszahnrad 13b funktionell zu einem Antriebszahnradpaar zusammengefasst, das mit einer eigenen dezentralen elektronischen Steuereinheit 35 kooperiert, die in das Netzwerk 34 eingebunden ist. Bei einem modularen Aufbau enthält zweckmäßigerweise jedes Trägermodul 7 eine solche dezentrale elektronische Steuereinheit 35.

In Verbindung mit einem modularen Schlittenträger 3 sind zweckmäßigerweise jedem Trägermodul 7 geeignete elektromechanische Schnittstellenmittel zugeordnet, die beim Zusammenbau des Schlittenträgers 3 eine einfache Kopplung zur Herstellung der gewünschten Netzwerkverbindung gestatten.

Der Schlittenträger 3 kann an einer oder an mehreren Stellen mit Sensormitteln ausgestattet sein, die eine Positionserfassung des mindestens einen Positionierschlittens 2 ermöglichen, und zwar zweckmäßigerweise getrennt für die aktuelle Position in der x-Achsrichtung und die aktuelle Position in der y-Achsrichtung. Entsprechende Positionserfassungsmittel können insbesondere auf optischer Basis arbeiten.

Die Positionierschlitten 2 sind je nach Ausgestaltung verwendbar, um unmittelbar einem bestimmten Zweck zuzuführende Produkte zu tragen oder auch um separate Produktträgermittel aufzunehmen, die mit Produkten beladen werden können. Ein möglicher Anwendungsfall ist die Nutzung des Positionierschlittens 2 zum Tragen sogenannter Mikrotiterplatten, die in der Laborautomation eingesetzt werden, um Fluidproben aufzubewahren. Unabhängig davon, in welcher Form ein Positionierschlitten 2 mit einem oder mehreren Produkten bestückbar oder bestückt ist, kann der Positionierschlitten 2 - insbesondere an seiner Unterseite 18 - mit einer lesbaren Kodierung versehen sein, die eine Produktidentifikation ermöglicht und die von einem beispielsweise am Schlittenträger 3 an einer bestimmten Stelle oder an mehreren Stellen angeordneten Identifikationsgerät auslesbar ist. Eine solche Kodierung kann auch zur Positionskontrolle genutzt werden.

Insbesondere bei großen Transportanlagen kann das Positioniersystem 1 auch mit RFID-Identifikationsmitteln ausgestattet sein, und zwar insbesondere im Bereich einer Zuführstation 42a und einer Abführstation 42b.

Das Positioniersystem 1 kann auch mit elektronischen Mitteln ausgestattet sein, die die Abwicklung eines Teach-Modus ermöglichen. So können beispielsweise an einer oder mehreren Stellen des Schlittenträgers 3 Mikroschalter vorhanden sein, die bei Annäherung eines Positionierschlittens 2 einen Teach-Modus aktivieren und die aktuelle Position des Positionierschlittens 2 an eine Steuerungssoftware melden.

Ein Vorteil des Positioniersystems 1 besteht darin, dass die für die Positionierung des Positionierschlittens 2 nutzbare Positionierfläche wesentlich größer sein kann als die Grundfläche des Schlittenträgers 3. Auf diese Weise nimmt der Aufbau des Positioniersystems 1 relativ wenig Platz in Anspruch.

Mit Hilfe des Positioniersystems 1 lässt sich auch ein kompaktes dreidimensionales Produktlagersystem realisieren. Beispielsweise können mehrere Positioniersysteme 1 nach Art eines Regalsystems mit Abstand zueinander vertikal übereinander platziert werden, wobei sie jeweils in der Lage sind, gleichzeitig eine größere Anzahl von Positionierschlitten 2 aufzunehmen. Diese Positionierschlitten 2 fungieren hier beispielsweise als Einlagerungspaletten, die nach Bedarf eingelagert und auch wieder ausgelagert werden können. Mit Hilfe einer Hubvorrichtung können die in mehreren Etagen angeordneten Positioniersysteme 1 bequem von der Seite her angefahren werden.

## Patentansprüche

1. Positioniersystem, mit mindestens einem unter Ausführung einer Positionierbewegung (4) in einer durch ein kartesisches x-y-Koordinatensystem definierten Positionierebene (5) relativ zu einem Schlittenträger (3) des Positioniersystems (1) variabel verfahrbaren und positionierbaren Positionierschlitten (2), wobei der Schlittenträger (3) wenigstens ein durch Antriebsmittel (28) des Positioniersystems (1) zu einer Antriebsdrehbewegung (16) um eine zur x-Achse des Koordinatensystems parallele Drehachse (14b) antreibbares y-Antriebszahnrad (13b) und wenigstens ein durch Antriebsmittel (28) zu einer Antriebsdrehbewegung um eine zur y-Achse des Koordinatensystems parallele Drehachse (14a) antreibbares x-Antriebszahnrad (13a) enthält, wobei jedes y-Antriebszahnrad (13b) und jedes x-Antriebszahnrad (13a) an seinem Außenumfang eine Antriebsverzahnung (15) aufweist und wobei der Positionierschlitten (2) über eine Abtriebs-Verzahnungsstruktur (23) verfügt, mit der er während der Positionierbewegung (4) gleichzeitig mit den Antriebsverzahnungen (15) mindestens eines x-Antriebszahnrades (13a) und mindestens eines y-Antriebszahnrades (13b) in Verzahnungseingriff steht und durch Rotation des betreffenden x-Antriebszahnrades (13a) zu einer Positionierbewegung (4) in der x-Achsrichtung des x-y-Koordinatensystems und durch Rotation des betreffenden y-Antriebszahnrades (13b) zu einer Positionierbewegung (4) in der y-Achsrichtung des x-y-Koordinatensystems antreibbar ist, wobei die Abtriebs-Verzahnungsstruktur (23) des Positionierschlittens (2) eine Vielzahl von in einer zur Positionierebene (5) parallelen Ebene punktförmig verteilten Abtriebszähnen (24) aufweist, die in einer zweidimensionalen Zahnmatrix (25) auf den Kreuzungspunkten zueinander rechtwinkeliger x-Gitterlinien (30a) und y-Gitterlinien (30b) eines imaginären Kreuzgitters platziert sind, wobei zumindest mehrere der Abtriebszähne (24) der Zahnmatrix (25) in der Lage sind, bei der Positionierbewegung (4) des Positionierschlittens (2) mit sowohl dem mindestens einen x-Antriebszahnrad (13a) als auch dem mindestens einen y-Antriebszahnrad (13b) in Verzahnungseingriff zu treten, **dadurch gekennzeichnet, dass** sich der Schlittenträger (3) aus einer Mehrzahl von Trägermodulen (7) zusammensetzt, die in der x-Achsrichtung und/oder in der y-Achsrichtung modular aneinander anreihbar oder aneinander angereiht sind und die jeweils mindestens ein x-Antriebszahnrad (13a) und mindestens ein y-Antriebszahnrad (13b) mit jeweils zugeordneten Antriebsmitteln (28) enthalten, wobei ein und derselbe Positionierschlitten (2) bei seiner Positionierbewegung (4) über mehrere der Trägermodule (7) hinweg verfahrbar ist.

2. Positioniersystem nach Anspruch 1, **dadurch gekennzeichnet, dass** jeder Abtriebszahn (24) der Zahnmatrix (25) ausgebildet ist, um bei der Positionierbewegung (4) des Positionierschlittens (2) mit sowohl dem mindestens einen x-Antriebszahnrad (13a) als auch dem mindestens einen y-Antriebszahnrad (13b) in Verzahnungseingriff treten zu können.

3. Positioniersystem nach Anspruch 1 oder 2, **dadurch gekennzeichnet, dass** die x-Gitterlinien (30a) untereinander den gleichen Abstand haben wie die y-Gitterlinien (30b).

4. Positioniersystem nach einem der Ansprüche 1 bis 3, **dadurch gekennzeichnet, dass** der mindestens eine Positionierschlitten (2) eine dem Schlittenträger (3) zugewandte Unterseite (18) hat, wobei die Abtriebs-Verzahnungsstruktur (23) an dieser Unterseite (18) angeordnet ist.

5. Positioniersystem nach einem der Ansprüche 1 bis 4, **dadurch gekennzeichnet, dass** der mindestens eine Positionierschlitten (2) mit seiner Abtriebs-Verzahnungsstruktur (23) lose auf den Antriebsverzahnungen (15) der Antriebszahnräder (13) aufliegt.

6. Positioniersystem nach einem der Ansprüche 1 bis 5, **dadurch gekennzeichnet, dass** der mindestens eine Positionierschlitten (2) als ein Produktträger ausgebildet ist, der direkt oder indirekt mit mindestens einem zu positionierenden Produkt bestückbar ist.

7. Positioniersystem nach einem der Ansprüche 1 bis 6, **dadurch gekennzeichnet, dass** der mindestens eine Positionierschlitten (2) einen rechteckigen Umriss hat und/oder plattenförmig ausgebildet ist.

8. Positioniersystem nach einem der Ansprüche 1 bis 7, **dadurch gekennzeichnet, dass** die Zahnmatrix (25) der Abtriebs-Verzahnungsstruktur (23) vier zueinander rechtwinkelige Randbereiche (27) hat und zweckmäßigerweise an allen vier Randbereichen (27) unbegrenzt ist.

9. Positioniersystem nach einem der Ansprüche 1 bis 8, **dadurch gekennzeichnet, dass** alle Antriebszahnräder (13) des Schlittenträgers (3) untereinander den gleichen Durchmesser haben, wobei ihre Drehachsen (14a, 14b) in einer gemeinsamen, zu der Positionierebene (5) parallelen Achsebene (32) liegen.

10. Positioniersystem nach einem der Ansprüche 1 bis 9, **dadurch gekennzeichnet, dass** der Schlittenträger (3) mit einer Mehrzahl von x-Antriebszahnrädern (13a) und/oder mit einer Mehrzahl von y-Antriebszahnrädern (13b) ausgestattet ist.

11. Positioniersystem nach einem der Ansprüche 1 bis 10, **dadurch gekennzeichnet, dass** der Schlittenträger (3) mit mindestens einem Antriebszahnradpaar ausgestattet ist, das aus einem x-Antriebszahnrad (13a) und einem y-Antriebszahnrad (13b) besteht, wobei diese beiden Antriebszahnräder (13a, 13b) parallel zur Positionierebene (5) in einer L-förmigen Konfiguration angeordnet sind, wobei ein axialer Endbereich (33a) des x-Antriebszahnrades (13a) benachbart zu einem axialen Endbereich (33b) des y-Antriebszahnrades (13b) platziert ist.

12. Positioniersystem nach einem der Ansprüche 1 bis 11, **dadurch gekennzeichnet, dass** der Schlittenträger (3) für jedes Antriebszahnrad (13a, 13b) über eigene Antriebsmittel (28) verfügt, die insbesondere elektromotorischer Art sind.

13. Positioniersystem nach einem der Ansprüche 1 bis 12, **dadurch gekennzeichnet, dass** die Antriebszahnräder (13) des Schlittenträgers (3) durch die ihnen zugeordneten Antriebsmittel (28) unabhängig voneinander rotativ antreibbar sind.

14. Positioniersystem nach einem der Ansprüche 1 bis 13, **dadurch gekennzeichnet, dass** ein und derselbe Positionierschlitten (2) bei seiner Positionierbewegung (4) über sämtliche der Trägermodule (7) hinweg verfahrbar ist.

15. Positioniersystem nach einem der Ansprüche 1 bis 14, **dadurch gekennzeichnet, dass** die Trägermodule (7) zur Ermöglichung einer zu ihrem Betrieb erforderlichen Energieübertragung und/oder Datenübertragung und/oder Signalübertragung miteinander vernetzbar oder vernetzt sind.

16. Positioniersystem nach einem der Ansprüche 1 bis 15, **dadurch gekennzeichnet, dass** die Grundfläche der die Zahnmatrix (25) enthaltenden Abtriebs-Verzahnungsstruktur (23) mindestens eines Positionierschlittens (2) größer ist als die Grundfläche des Schlittenträgers (3) oder jedes Trägermoduls (7) .

17. Positioniersystem nach einem der Ansprüche 1 bis 16, **dadurch gekennzeichnet, dass** der Schlittenträger (3) randseitig mindestens eine Übergabestation (42) definiert, die geeignet ist, um den Schlittenträger (3) dem Positionierschlitten (2) zuzuführen und/oder um den Positionierschlitten (2) von dem Schlittenträger (3) abzuführen.

18. Positioniersystem nach einem der Ansprüche 1 bis 17, **dadurch gekennzeichnet dass** die Abtriebs-Verzahnungsstruktur (23) des Positionierschlittens (2) eine Mehrzahl von in der x-Achsrichtung verlaufenden und in einer zur Positionierebene (5) parallelen Ebene mit Abstand nebeneinander angeordneten nutartigen x-Vertiefungen (26a) und eine Mehrzahl von in der y-Achsrichtung verlaufenden und in einer zur Positionierebene (5) parallelen Ebene mit Abstand nebeneinander angeordneten nutartigen y-Vertiefungen (26b) aufweist, wobei sich die x-Vertiefungen (26a) und die y-Vertiefungen (26b) unter seitlicher Flankierung der zu der zweidimensionalen Zahnmatrix (25) gehörenden Abtriebszähne (24) rechtwinkelig kreuzen.

## Claims

1. Positioning system with at least one positioning slide (2), which is variably movable and positionable relative to a slide support (3) of the positioning system (1) in a positioning plane (5) defined by a Cartesian x-y-coordinate system while performing a positioning movement (4), wherein the slide support (3) comprises at least one y-drive gear (13b), which can be driven by a drive means (28) of the positioning system (1) to perform a rotary drive movement (16) about an axis of rotation (14b) parallel to the x-axis of the coordinate system, and at least one x-drive gear (13a), which can be driven by a drive means (28) to perform a rotary drive movement about an axis of rotation (14a) parallel to the y-axis of the coordinate system, wherein each y-drive gear (13b) and each x-drive gear (13a) has a drive toothing (15) at its outer circumference, and wherein the positioning slide (2) has an output toothing structure (23), with which it meshes during the positioning movement (4) simultaneously with the drive toothings (15) of at least one x-drive gear (13a) and at least one y-drive gear (13b) and can be driven by rotation of the respective x-drive gear (13a) to perform a positioning movement (4) in the x-axis direction of the x-y-coordinate system and by rotation of the respective y-drive gear (13b) to perform a positioning movement (4) in the y-axis direction of the x-y-coordinate system, wherein the output toothing structure (23) of the positioning slide (2) has a plurality of output teeth (24), which are distributed in a punctiform manner in a plane parallel to the positioning plane (5) and which are placed in a two-dimensional tooth matrix (25) at the crossing points of mutually perpendicular x-grid lines (30a) and y-grid lines (30b) of an imaginary cross grid, wherein at least several of the output teeth (24) of the tooth matrix (25) are capable of moving into toothing engagement both with the at least one x-drive gear (13a) and with the at least one y-drive gear (13b) in the positioning movement (4) of the positioning slide (2), **characterised in that** the slide support (3) is composed of a plurality of support modules (7), which can be or are lined up in a modular fashion in the x-axis direction and/or in the y-axis direction and each of which comprises at least one x-drive gear (13a) and at least one y-drive gear (13b), each with assigned drive means (18), wherein one and the same positioning slide (2) can be moved across several of the support modules (7) in its positioning movement (4).

2. Positioning system according to claim 1, **characterised in that** each output tooth (24) of the tooth matrix (25) is designed to be capable of moving into toothing engagement both with the at least one x-drive gear (13a) and with the at least one y-drive gear (13b) in the positioning movement (4) of the positioning slide (2).

3. Positioning system according to claim 1 or 2, **characterised in that** the x-grid lines (30a) have the same mutual spacing as the y-grid lines (30b).

4. Positioning system according to any of claims 1 to 3, **characterised in that** the at least one positioning slide (2) has an underside (18) facing the slide support (3), the output toothing structure (23) being located on this underside (18).

5. Positioning system according to any of claims 1 to 4, **characterised in that** the at least one positioning slide (2) loosely rests on the drive toothings (15) of the drive gears (13) with its output toothing structure (23).

6. Positioning system according to any of claims 1 to 5, **characterised in that** the at least one positioning slide (2) is designed as a product support on which a product to be positioned can be placed either directly or indirectly.

7. Positioning system according to any of claims 1 to 6, **characterised in that** the at least one positioning slide (2) has a rectangular outline and/or is designed to be plate-shaped.

8. Positioning system according to any of claims 1 to 7, **characterised in that** the tooth matrix (25) of the output toothing structure (23) has four edge regions (27) which are perpendicular to one another and is expediently unbounded in all four edge regions (27).

9. Positioning system according to any of claims 1 to 8, **characterised in that** all drive gears (13) of the slide support (3) have the same diameter, their axes of rotation (14a, 14b) lying in a common axial plane (32) parallel to the positioning plane (5).

10. Positioning system according to any of claims 1 to 9, **characterised in that** the slide support (3) is equipped with a plurality of x-drive gears (13a) and/or with a plurality of y-drive gears (13b).

11. Positioning system according to any of claims 1 to 10, **characterised in that** the slide support (3) is equipped with at least one drive gear pair consisting of an x-drive gear (13a) and a y-drive gear (13b), wherein these two drive gears (13a, 13b) are arranged in an L-shaped configuration parallel to the positioning plane (5), wherein an axial end region (33a) of the x-drive gear (13a) is placed adjacent to an axial end region (33b) of the y-drive gear (13b).

12. Positioning system according to any of claims 1 to 11, **characterised in that** the slide support (3) has dedicated drive means (28), in particular of an electromotive type, for each drive gear (13a, 13b).

13. Positioning system according to any of claims 1 to 12, **characterised in that** the drive gears (13) of the slide support (3) can be driven to rotate independently of one another by their assigned drive means (28).

14. Positioning system according to any of claims 1 to 13, **characterised in that** one and the same positioning slide (2) can be moved across all of the support modules (7) in its positioning movement (4).

15. Positioning system according to any of claims 1 to 14, **characterised in that** the support modules (7) can be or are interlinked to facilitate an energy transmission and/or a data transmission and/or a signal transmission required for their operation.

16. Positioning system according to any of claims 1 to 15, **characterised in that** the base area of the output toothing structure (23), containing the tooth matrix (25), of at least one positioning slide (2) is larger than the base area of the slide support (3) or of each support module (7).

17. Positioning system according to any of claims 1 to 16, **characterised in that** the slide support (3) defines at the edge at least one transfer station (42) suitable for moving the slide support (3) to the positioning slide (2) and/or for moving the positioning slide (2) away from the slide support (3).

18. Positioning system according to any of claims 1 to 17, **characterised in that** the output toothing structure (23) of the positioning slide (2) has a plurality of groove-like x-recesses (26a) extending in the x-axis direction and arranged with spacing side by side in a plane parallel to the positioning plane (5) and a plurality of groove-like y-recesses (26b) extending in the y-axis direction and arranged with spacing side by side in a plane parallel to the positioning plane (5), wherein the x-recesses (26a) and the y-recesses (26b) cross one another at right angles while laterally flanking the output teeth (24) belonging to the two-dimensional tooth matrix (25).

## Revendications

1. Système de positionnement, avec au moins un chariot de positionnement (2) pouvant être déplacé et positionné de manière variable en exécutant un mouvement de positionnement (4) dans un plan de positionnement (5) défini par un système de coordonnées x-y cartésien par rapport à un support de chariot (3) du système de positionnement (1), dans lequel le support de chariot (3) contient au moins une roue dentée d'entraînement y (13b) pouvant être entraînée par des moyens d'entraînement (28) du système de positionnement (1) en un mouvement de rotation d'entraînement (16) autour d'un axe de rotation (14b) parallèle à l'axe x du système de coordonnées et au moins une roue dentée d'entraînement x (13a) pouvant être entraînée par des moyens d'entraînement (28) en un mouvement de rotation d'entraînement autour d'un axe de rotation (14a) parallèle à l'axe y du système de coordonnées, dans lequel chaque roue dentée d'entraînement y (13b) et chaque roue dentée d'entraînement x (13a) présente au niveau de sa périphérie extérieure une denture d'entraînement (15) et dans lequel le chariot de positionnement (2) dispose d'une structure de denture de sortie (23), avec laquelle il est en prise par denture pendant le déplacement de positionnement (4) de manière simultanée avec les dentures d'entraînement (15) d'au moins une roue dentée d'entraînement x (13a) et d'au moins une roue dentée d'entraînement y (13b) et peut être entraîné par la rotation de la roue dentée d'entraînement x (13a) correspondant en un mouvement de positionnement (4) dans la direction axiale x du système de coordonnées x-y et par la rotation de la roue dentée d'entraînement y (13b) concernée en un mouvement de positionnement (4) dans la direction axiale y du système de coordonnées x-y, dans lequel la structure de denture de sortie (23) du chariot de positionnement (2) présente une pluralité de dents de sortie (24) réparties de manière ponctuelle dans un plan parallèle au plan de positionnement (5), qui sont placées dans une matrice de dent (25) bidimensionnelle sur les points d'intersection de lignes de quadrillage x (30a) et de lignes de quadrillage y (30b) formant un angle droit les unes par rapport aux autre d'un quadrillage d'intersection imaginaire, dans lequel au moins plusieurs des dents de sortie (24) de la matrice de dent (25) sont en mesure de venir en prise par denture lors du mouvement de positionnement (4) du chariot de positionnement (2) avec à la fois l'au moins une roue dentée d'entraînement x (13a) et l'au moins une roue dente d'entraînement y (13b), **caractérisé en ce que** le support de chariot (3) se compose d'une multitude de modules de support (7), qui peuvent être alignés ou sont alignés les uns au niveau des autres de manière modulaire dans la direction axiale x et/ou dans la direction axiale y et qui contiennent respectivement au moins une roue dentée d'entraînement x (13a) et au moins une roue dentée d'entraînement y (13b) avec des moyens d'entraînement (28) respectivement associés, dans lequel un seul et même chariot de positionnement (2) peut être déplacé lors de son mouvement de positionnement (4) par l'intermédiaire de plusieurs des modules de support (7).

2. Système de positionnement selon la revendication 1, **caractérisé en ce que** chaque dent de sortie (24) de la matrice de dent (25) est réalisée pour pouvoir venir en prise par denture lors du mouvement de positionnement (4) du chariot de positionnement (2) avec à la fois l'au moins une roue dentée d'entraînement x (13a) et l'au moins une roue dentée d'entraînement y (13b).

3. Système de positionnement selon la revendication 1 ou 2, **caractérisé en ce que** les lignes de quadrillage x (30a) présentent entre elles la même distance que les lignes de quadrillage y (30b).

4. Système de positionnement selon l'une quelconque des revendications 1 à 3, **caractérisé en ce que** l'au moins un chariot de positionnement (2) a un côté inférieur (18) tourné vers le support de chariot (3), dans lequel la structure de denture de sortie (23) est disposée au niveau dudit côté inférieur (18).

5. Système de positionnement selon l'une quelconque des revendications 1 à 4, **caractérisé en ce que** l'au moins un chariot de positionnement (2) repose par sa structure de denture de sortie (23) de manière lâche sur les dentures d'entraînement (15) des roues dentées d'entraînement (13).

6. Système de positionnement selon l'une quelconque des revendications 1 à 5, **caractérisé en ce que** l'au moins un chariot de positionnement (2) est réalisé sous la forme d'un support de produit, qui peut être chargé directement ou indirectement avec au moins un produit à positionner.

7. Système de positionnement selon l'une quelconque des revendications 1 à 6, **caractérisé en ce que** l'au moins un chariot de positionnement (2) a un contour rectangulaire et/ou est réalisé de manière à présenter une forme de plateau.

8. Système de positionnement selon l'une quelconque des revendications 1 à 7, **caractérisé en ce que** la matrice de dent (25) de la structure de denture de sortie (23) a quatre zones de bord (27) formant un angle droit les unes par rapport aux autres et n'est pas délimitée de manière appropriée au niveau de l'ensemble des quatre zones de bord (27).

9. Système de positionnement selon l'une quelconque des revendications 1 à 8, **caractérisé en ce que** toutes les roues dentées d'entraînement (13) du support de chariot (3) ont entre elles le même diamètre, dans lequel leurs axes de rotation (14a, 14b) se situent dans un plan axial (32) commun parallèle au plan de positionnement (5).

10. Système de positionnement selon l'une quelconque des revendications 1 à 9, **caractérisé en ce que** le support de chariot (3) est équipé d'une multitude de roues dentées d'entraînement x (13a) et/ou d'une multitude de roues dentées d'entraînement y (13b).

11. Système de positionnement selon l'une quelconque des revendications 1 à 10, **caractérisé en ce que** le support de chariot (3) est équipé d'au moins une paire de roues dentées d'entraînement, qui est constituée d'une roue dentée d'entraînement x (13a) et d'une roue dentée d'entraînement y (13b), dans lequel lesdites deux roues dentées d'entraînement (13a, 13b) sont disposées de manière parallèle au plan de positionnement (5) dans une configuration en forme de L, dans lequel une zone d'extrémité (33a) axiale de la roue dentée d'entraînement x (13a) est placée de manière adjacente à une zone d'extrémité (33b) axiale de la roue dentée d'entraînement y (13b).

12. Système de positionnement selon l'une quelconque des revendications 1 à 11, **caractérisé en ce que** le support de chariot (3) dispose pour chaque roue dentée d'entraînement (13a, 13b) de moyens d'entraînement (28) propres, qui sont en particulier du type électromoteur.

13. Système de positionnement selon l'une quelconque des revendications 1 à 12, **caractérisé en ce que** les roues dentées d'entraînement (13) du support de chariot (3) peuvent être entraînées en rotation indépendamment les unes des autres par les moyens d'entraînement (28) qui leur sont associés.

14. Système de positionnement selon l'une quelconque des revendications 1 à 13, **caractérisé en ce qu'**un seul et même chariot de positionnement (2) peut être déplacé lors de son mouvement de positionnement (4) par l'intermédiaire de tous les modules de support (7).

15. Système de positionnement selon l'une quelconque des revendications 1 à 14, **caractérisé en ce que** les modules de support (7) peuvent être mis en réseau ou sont mis en réseau les uns avec les autres pour permettre une transmission d'énergie et/ou une transmission de données et/ou une transmission de signaux requise aux fins de leur fonctionnement.

16. Système de positionnement selon l'une quelconque des revendications 1 à 15, **caractérisé en ce que** la surface de base de la structure de denture de sortie (23) contenant la matrice de dent (25) d'au moins un chariot de positionnement (2) est plus grande que la surface de base du support de chariot (3) ou de chaque module de support (7).

17. Système de positionnement selon l'une quelconque des revendications 1 à 16, **caractérisé en ce que** le support de chariot (3) définit côté bord au moins un poste de transfert (42), qui est adapté pour amener au chariot de positionnement (2) le support de chariot (3) et/ou pour retirer du support de chariot (3) le chariot de positionnement (2).

18. Système de positionnement selon l'une quelconque des revendications 1 à 17, **caractérisé en ce que** la structure de denture de sortie (23) du chariot de positionnement (2) présente une multitude de renfoncements x (26a) de type rainure s'étendant dans la direction axiale x et disposés de manière juxtaposée à distance dans un plan parallèle au plan de positionnement (5) et une multitude de renfoncements y (26b) de type rainure s'étendant dans la direction axiale y et disposés de manière juxtaposée à distance dans un plan parallèle au plan de positionnement (5), dans lequel les renfoncements x (26a) et les renfoncements y (26b) se croisent en formant un angle droit en flanquant de manière latérale les dents de sortie (24) faisant partie de la matrice de dent (25) bidimensionnelle.
